# FASCICULE DE BREVET EUROPEEN

(11) **EP 1 566 295 B1**
(45) Date de publication et mention de la délivrance du brevet: **30.04.2008**
(21) Numéro de dépôt: 05101262.3
(22) Date de dépôt: 18.02.2005
(51) Int. Cl.: B60J 1/20, B60J 7/00

(54) **Dispositif d'occultation pour véhicule automobile, et véhicule correspondant**
Verdunkelungsvorrichtung für Motorfahrzeuge, und solche Fahrzeuge
Occultation device for motor vehicle, and such a motor vehicle

(30) Priorité: 18.02.2004 FR 0401645; 15.12.2004 FR 0413374
(43) Date de publication de la demande: 24.08.2005
(73) Titulaire: WAGON SAS, 79302 Bressuire Cédex (FR)
(72) Inventeur: Pierrot, Julien, 49300 Cholet (FR)
(74) Mandataire: Bioret, Ludovic

(56) Documents cités:
- EP-A- 1 006 012
- EP-A- 1 243 474
- WO-A-96/01191
- FR-A- 2 805 495
- US-B1- 6 416 103

## Description

Le domaine de l'invention est celui des véhicules automobiles, et notamment des véhicules présentant une surface vitrée importante, par exemple au niveau du pavillon. Plus précisément, l'invention concerne l'occultation de telles surfaces vitrées, notamment pour se protéger des rayons du soleil.

La tendance actuelle, en matière de véhicule automobile, est de proposer de plus en plus de surfaces vitrées. Ainsi, notamment, on a proposé des véhicules présentant un pavillon équipé d'un ou plusieurs éléments vitrés. Dans certains cas, l'intégralité du pavillon est en verre ou en un matériau similaire laissant passer les rayons du soleil.

On a également proposé des surfaces vitrées multiples, par exemple sous la forme de deux ou trois éléments, dont certains peuvent former toits ouvrants. De la même façon, des surfaces vitrées importantes peuvent être prévues sur d'autres parties du véhicule, et par exemple à l'arrière, notamment lorsque le véhicule est équipé d'un hayon.

On comprend qu'il est alors nécessaire de prévoir des moyens d'occultation, pour protéger l'habitacle et ses occupants du soleil. Lorsque le pavillon est équipé d'un toit ouvrant, on a pensé à l'équiper d'un volet rigide, pouvant coulisser dans le pavillon. Cette solution pourrait éventuellement être étendue au cas où plusieurs zones vitrées existent, sous réserve qu'il reste suffisamment d'espace dans le pavillon pour dissimuler les volets lorsque ceux-ci ne sont pas utilisés pour occulter la surface vitrée correspondante. Clairement, en revanche, une telle solution ne peut pas être envisagée lorsque le pavillon est intégralement, ou essentiellement, vitré.

Pour les surfaces vitrées réduites, et verticales ou sensiblement verticales, telles que les vitres arrières ou latérales du véhicule, on connaît également les stores à enrouleur, que l'on peut déployer pour se protéger du soleil. Il n'est malheureusement pas possible de transposer cette technique du store à enrouleur, et plus généralement de tous types de toiles d'occultation, à une surface de grande taille, non verticale, et qui plus est généralement non plane, tels que le sont par exemple les pavillons de véhicules actuels ou futurs.

En effet, si l'on développait horizontalement un store dont les dimensions pourraient être approximativement de 1,5 m en longueur, et de 1 m en largeur, pour occulter un pavillon vitré, la toile "pocherait", c'est-à-dire que ses bords latéraux se rapprocheraient légèrement l'un de l'autre, ce qui provoquerait un creux au centre de la toile, des plis ou des froncements, et/ou baillerait, sous l'effet de la gravité. Cela serait bien sûr inacceptable, tant en ce qui concerne le simple aspect visuel et ergonomique que pour l'efficacité de l'occultation, la lumière pouvant alors passer le long des bords.

En outre, les pavillons des véhicules sont le plus souvent non plats mais au contraire incurvés ou galbés, au moins dans le sens de la largeur et également parfois dans le sens de la longueur. À nouveau, le simple déploiement d'une toile d'occultation ne serait alors ni efficace, ni ergonomique, ni esthétique.

Une technique connue de l'art antérieur propose l'utilisation de baleines en plastique ou en métal qui maintiennent la toile d'occultation dans la position déployée souhaitée. Selon une technique connue, les baleines sont logées dans la toile en les glissant à l'intérieur de fourreaux constitués chacun par une pièce de tissu rapportée sur la toile d'occultation et solidarisée par exemple par soudure à celle-ci.

Un des inconvénients de cette technique réside dans son caractère inesthétique. En effet, lorsque les baleines rigides sont glissées dans les fourreaux de toile prévus à cet effet, la toile risque d'être détériorée, ou à tout le moins « marquée », lors de l'enroulement à cause de la présence des baleines rigides.

Une solution à ce problème a été décrite dans le document publié sous le numéro FR 2805495, divulguant toutes les caractéristiques du préambule de la revendication 1 et déposé au même nom que le présente demande. Selon cette technique en effet, les baleines sont désolidarisées de la toile d'occultation lorsque cette dernière est repliée, un système permettant de coupler les baleines à la toile au fur et à mesure de son déploiement. Cette technique permet effectivement d'empêcher la détérioration de la toile lorsque celle-ci est enroulée. Cependant, les baleines restent visibles dans l'habitacle de la voiture ou nécessite un logement spécifique. En outre, cette technique est essentiellement destinée au cas où il n'y a qu'une seule baleine.

Un autre inconvénient de ces techniques réside dans le fait qu'elles sont complexes et coûteuses à mettre en oeuvre. En effet, dans le cas des dispositifs d'occultation présentant des baleines glissées dans des fourreaux, leur procédé de fabrication selon lequel des pièces de tissu sont rapportées et soudées sur la toile d'occultation et les baleines ensuite glissées à l'intérieur est long et coûteux à mettre en oeuvre. Dans le cas de dispositifs comprenant des baleines se désolidarisant de la toile d'occultation, ceux-ci présentent un système de rail de guidage et des baleines spécifiques présentant un élément d'accrochage. Ces dispositifs sont donc complexes et coûteux à fabriquer et à monter.

Encore un inconvénient de la présence de baleines lors de l'enroulement est qu'elles sont à l'origine de surépaisseur locales susceptibles de perturber l'efficacité de l'enroulement à cause d'une mauvaise répartition de la contrainte exercée sur la toile lors de l'enroulement.

L'invention a notamment pour objectif de pallier ces différents inconvénients de l'état de l'art.

Plus précisément, l'invention a pour objectif de fournir un store (ou dispositif d'occultation) pour véhicule automobile qui soit efficace et qui présente un aspect visuel de bonne qualité, lorsqu'il est déployé.

En particulier, un objectif de l'invention est que le store ne « poche » pas lors de l'occultation d'une surface importante, telle qu'un pavillon de véhicule automobile, et que la toile d'occultation ne soit pas détériorée, déformée et/ou décolorée par des baleines, lorsqu'elle est repliée.

Un autre objectif de l'invention est de fournir un store dont l'encombrement est le plus réduit possible, notamment lorsqu'il est replié, afm qu'il puisse être aisément monté dans le véhicule.

Un autre objectif de l'invention est de proposer un store dont le repliement est aisé.

Encore un autre objectif de l'invention est de proposer un store qui reste léger et dont le procédé de fabrication soit simple et relativement peu coûteux à mettre en oeuvre.

Ces objectifs, ainsi que d'autres qui apparaîtront par la suite, sont atteints à l'aide d'un store à enrouleur pour véhicule automobile, comprenant une toile d'occultation montée sur un tube enrouleur et mobile entre au moins deux positions, une position repliée, dans laquelle la toile est enroulée autour du tube enrouleur, et une position déployée, dans laquelle la toile d'occultation est maintenue et/ou guidée par au moins un élément longitudinal de renfort s'étendant parallèlement au tube enrouleur.

Selon l'invention, le store comprend une enveloppe de continuité d'appui de la toile d'occultation au voisinage de l'élément longitudinal de renfort, présentant deux ailes, réparties de part et d'autre de l'élément longitudinal de renfort, d'épaisseur variable, diminuant progressivement en s'approchant des extrémités desdites ailes, de façon que dans la position repliée, la toile d'occultation prenne appui sur les ailes au voisinage de l'élément longitudinal de renfort, pour assurer sensiblement une continuité d'appui pour l'ensemble de la toile d'occultation.

Ainsi, l'invention repose sur une approche tout à fait nouvelle et inventive consistant à prévoir une enveloppe de continuité d'appui comprenant des ailes de part et d'autre d'éléments longitudinaux de renfort, de façon à empêcher, ou à tout le moins de limiter, le marquage de la toile lors de l'enroulement et à faciliter l'enroulement et le déroulement de la toile autour du tube.

En effet, les éléments longitudinaux de renfort, qui sont réalisés dans un matériau rigide et qui permettent de maintenir la toile lorsqu'elle est dépliée de façon qu'elle ne poche pas, sont à l'origine, localement, de surépaisseurs lors de l'enroulement. Ce phénomène, appelé « effet balourd », est susceptible d'occasionner une rotation par à-coups lors du déroulement, et donc une sensation peu agréable de mauvaise qualité ou de mauvais fonctionnement, en raison du déplacement du centre de gravité dû à la surépaisseur par rapport à l'axe de rotation.

La surépaisseur et le manque de continuité d'appui sont en outre susceptibles, en position repliée, de marquer le tissu de la toile d'occultation en contact avec la surépaisseur, ainsi que les angles éventuels que peuvent présenter les éléments de renfort, la toile enroulée étant tendue au niveau de ces angles.

En effet, lorsque la toile est enroulée et tendue autour des éléments de renfort, un espace vide (ou zone de non contact) est généré le long de chaque élément de renfort, de part et d'autre de celui-ci. La toile ne repose alors sur rien et n'est pas en contact avec la toile du tour d'enroulement précédent, ce qui est à l'origine du marquage de la toile, comme expliqué précédemment, mais également d'un enroulement et d'un déroulement moins régulier et moins aisé. Ces espaces vides provoquent en effet une moins bonne répartition de la contrainte lors de l'enroulement.

Les ailes prévues de part et d'autre des éléments longitudinaux de renfort permettent ainsi de combler cet espace et de former une continuité d'appui de la toile. L'épaisseur de chaque aile est variable, diminuant progressivement en s'éloignant de l'élément de renfort. La longueur et l'épaisseur des ailes sont ainsi choisies en fonction de l'épaisseur l'élément de renfort et de la dimension de l'espace vide entre la toile au niveau de l'élément de renfort et le tour d'enroulement de toile précédent.

Les ailes formant une continuité d'appui de la toile permettent ainsi d'empêcher la toile d'être marquée, et un enroulement et un déroulement efficaces et aisés, la contrainte étant mieux répartie.

Le document publié sous le numéro FR-2805495 prévoyait également une technique apportant une solution particulière aux surépaisseurs locales dues à la présence de baleines lors de l'enroulement. Selon cette technique, des éléments en mousse sont placés entre les baleines, l'épaisseur de ces éléments étant choisie de façon qu'elle corresponde sensiblement à la surépaisseur engendrée par une baleine.

Cependant, les éléments en mousse, d'épaisseur uniforme et se prolongeant sur toute la longueur de la toile entre deux baleines, visaient uniquement à obtenir un enroulement de section transversale cylindrique pour des raisons esthétiques, de façon à éliminer l'effet balourd. En outre, l'ensemble replié occupait alors un espace important l'épaisseur globale de l'ensemble de la toile du store étant alors augmentée.

La présente invention vise au contraire, non pas à éliminer l'effet de balourd, mais à empêcher que celui-ci ne soit à l'origine d'une détérioration de la toile ou d'une perturbation de l'enroulement. Les ailes d'épaisseur variable mises en oeuvre dans la présente invention ne corrigent ainsi pas le balourd, mais définissent une surface d'appui de la toile au niveau des espaces vides lors de l'enroulement. En outre, les ailes selon l'invention n'augmentent donc pas l'encombrement du store dans sa position repliée, contrairement à la technique décrite précédemment.

Les éléments longitudinaux de renfort selon l'invention jouent le rôle de baleines dans la mesure où ils participent au maintien de la toile en position déployée. Ils peuvent être réalisés en plastique ou en métal, et plus particulièrement en acier par exemple.

Ils pourront notamment être cylindriques et être pleins ou creux (de façon à diminuer le poids du store). Ils pourront également présenter une section incurvée par exemple.

En outre, les ailes présentes de part et d'autre des éléments longitudinaux de renfort participent également au maintien de la toile dans la position déployée et à la fonction de « baleine ».

L'invention permet ainsi d'obtenir une solution particulièrement adaptée à l'occultation de surfaces de grandes dimensions d'un véhicule automobile. Il peut notamment s'agir d'un pavillon intégralement ou en grande partie vitré, ou de la vitre arrière du véhicule. Le store proposé par l'invention peut également servir de cache-bagages par exemple.

L'extrémité libre de la toile pourra classiquement être équipée d'une barre de tirage.

De façon avantageuse la toile d'occultation circule à l'intérieur des éléments longitudinaux de renfort, et des moyens de blocage immobilisent la toile d'occultation par rapport aux éléments de renfort.

On peut en effet prévoir que les éléments de renfort soient incurvés, en forme d'un arc de cercle par exemple, défmissant ainsi une cavité à l'intérieur de laquelle circule la toile d'occultation, des moyens de blocages permettant de d'immobiliser celle-ci dans la cavité.

Les moyens de blocage pourront également permettre de plaquer celle-ci contre la paroi interne des éléments de renfort le long de laquelle elle circule.

De façon préférée, les moyens de blocage forment une tringle de maintien venant se loger à l'intérieur de l'élément longitudinal de renfort.

Les éléments longitudinaux de renfort pourront ainsi former une portion d'arc de cercle supérieure à un demi-cercle, de façon qu'il soit possible de clipser une tringle cylindrique (ou hémicylindrique par exemple) à l'intérieur de chaque élément de renfort en bloquant dans le même temps la toile entre la paroi interne de l'élément de renfort et la tringle.

Il sera bien sûr également possible de glisser la tringle à l'intérieur de l'élément longitudinal par exemple.

Les tringles pourront être réalisées en plastique ou en métal et pourront être pleines ou creuses, de façon dans ce dernier cas à limiter le poids de l'ensemble du store.

Les tringles bloquant la toile à l'intérieur des éléments de renfort permettent ainsi de tendre celle-ci et participent en outre également au maintien de la toile dans sa position déployée.

De façon avantageuse, l'enveloppe présentant des ailes est montée clipsée et/ou collée sur l'élément longitudinal de renfort.

Selon un premier mode de réalisation avantageux de l'invention, l'enveloppe est formée par une portion supérieure de l'élément longitudinal de renfort et par lesdites deux ailes.

Selon un second mode de réalisation avantageux de l'invention, l'enveloppe comprend, outre les ailes situées latéralement par rapport à l'élément de renfort, une portion intermédiaire recouvrant la partie supérieure de l'élément de renfort, de façon à protéger la toile du tour d'enroulement suivant dans la position repliée.

De façon préférentielle, l'enveloppe présente, une surface inférieure venant dans la position repliée prendre appui sur le tour d'enroulement précédent de la toile d'occultation, et une surface supérieure sur laquelle vient prendre appui le tour d'enroulement suivant de la toile d'occultation.

Avantageusement, la ou les enveloppes sont réalisées au moins partiellement dans un matériau souple.

Cela est en effet avantageux dans la mesure où la forme de l'enveloppe, et notamment celle des ailes, peut ainsi s'adapter à la position déployée ou repliée de la toile. En effet, lorsque la toile est déployée, les ailes peuvent contribuer, au moins dans certains modes de réalisation, au maintien de la toile sensiblement dans un plan, pouvant être incurvé si la surface à occulter présente un galbe particulier.

Lors de l'enroulement, les ailes souples peuvent ainsi se courber de façon à limiter l'encombrement dans la position repliée tout en formant une continuité d'appui de la toile, et en permettant un repliement efficace en assurant la répartition de la contrainte lors de l'enroulement. L'ensemble formé par un élément de renfort et les ailes d'épaisseur décroissante présente une section transversale ayant la forme générale d'un chapeau de gendarme aux extrémités souples. Cette forme présente s'avantage de s'enrouler facilement autour du tube d'enroulement, et bien que formant un balourd, ne perturbe pas la répartition et la propagation de la contrainte appliquée lors de l'enroulement.

En outre, la souplesse de l'enveloppe permet d'éviter le marquage de la toile, et notamment des tours d'enroulement de toile précédant et suivant un élément longitudinal de renfort, au niveau desquels la toile est directement en contact avec celui-ci, l'enveloppe souple formant une interface protectrice.

Selon un premier mode de réalisation avantageux de l'invention, le matériau souple dans lequel est réalisée au moins partiellement l'enveloppe est un matériau compressible, comme par exemple les mousses.

Préférentiellement, le matériau utilisé pourra être un matériau expansé de type polyuréthanne, polypropylène ou polystyrène. L'utilisation de ces matériaux permet d'obtenir une continuité d'appui de la toile au voisinage des éléments de renfort.

En effet, lors de l'enroulement, les ailes s'incurvent de façon à épouser la forme du tube d'enroulement et comblent l'espace existant entre la toile tendue sur l'élément de renfort et le tour d'enroulement précédent. En outre, l'effet mousse du matériau contribue la répartition de la contrainte lors de l'enroulement et permet ainsi un enroulement efficace. En position déployée en revanche, l'enveloppe est affranchie de cette contrainte et retrouve sa forme d'origine.

Par ailleurs, l'utilisation de ces matériaux généralement légers permet de réduire le poids du store et, lors de l'application d'une contrainte, notamment lors du repliement et dans la position repliée du dispositif d'occultation, de réduire au maximum son encombrement. La dimension des ailes sera en effet choisie de façon qu'elles définissent une surface d'appui, sans pour autant qu'elles augmentent l'encombrement.

Selon un second mode de réalisation avantageux de l'invention, le matériau souple dans lequel est réalisée au moins partiellement l'enveloppe est un matériau incompressible (ou faiblement compressible). De façon préférée, pourront être utilisés le caoutchouc, le TPE (Thermo Plastique Elastomère) ou l'EPDM (Ethylène Propylène Diène Monomère). Ces matériaux sont déformables sous la contrainte et permettent donc comme le précédent mode de réalisation d'obtenir une continuité d'appui de la toile au voisinage des éléments de renfort.

L'enveloppe pourra bien sûr également être réalisée par exemple dans deux types de matériaux de souplesse différente. Ainsi, une couche interne de souplesse moindre pourra notamment assurer la continuité d'appui de la toile et être recouverte d'une couche plus souple destinée à protéger le revêtement de la toile.

Avantageusement, la ou les enveloppes sont réalisées par extrusion ou par moulage. L'enveloppe pourra également être directement surmoulée sur lesdits éléments de renfort.

Préférentiellement, la ou les enveloppes sont rapportées par collage ou par moulage sur la toile d'occultation. Le collage pourra être préféré car, lors du report par soudure, les lignes de soudure pourraient être visibles du côté visible de la toile.

Le procédé de fabrication du store pourra ainsi être simplifié.

De façon avantageuse, le tube enrouleur présente au moins un méplat, coïncidant avec la position d'un élément longitudinal de renfort dans ladite position repliée, de façon que le store défmisse, en fin d'enroulement, une section sensiblement circulaire.

L'élément de renfort étant à l'origine d'un balourd, il est en effet possible de compenser celui-ci en prévoyant un méplat au niveau du tube d'enroulement. Les deux bords du méplat pourront en particulier être arrondis, de façon qu'ils ne détériorent pas la toile, et notamment le premier tour d'enroulement de la toile.

On pourra par exemple prévoir autant de méplat que d'éléments longitudinaux et choisir le diamètre du tube d'enroulement de façon à optimiser leur répartition, ou simplement ne prévoir un méplat que pour une partie seulement des éléments longitudinaux.

Avantageusement, le store à enrouleur est destiné à occulter au moins un des éléments appartenant au groupe comprenant :
- les vitres latérales ;
- les vitres de custode ;
- les vitres arrière ;
- les pavillons ;
- les toits ouvrants ; et/ou
- les espaces destinés à recevoir les bagages.

L'invention telle que présentée concerne également tout véhicule automobile comprenant un tel store à enrouleur.

D'autres caractéristiques et avantages de l'invention apparaîtront plus clairement à la lecture de la description suivante de plusieurs modes de réalisation préférentiels, donnés à titre de simples exemples illustratifs et non limitatifs, et des dessins annexés, parmi lesquels :
- la figure 1 présente la coupe transversale d'un store à enrouleur selon l'art antérieur, en position repliée;
- la figure 2 présente un premier mode de réalisation de l'invention illustrant une coupe transversale d'un élément de renfort et d'une enveloppe de continuité d'appui pouvant équiper un store à enrouleur;
- les figures 3A et 3B illustrent, selon une coupe transversale, la mise en oeuvre d'un élément de renfort et d'une enveloppe de continuité d'appui selon un deuxième mode de réalisation de l'invention ;
- les figures 4A et AB présentent la coupe transversale d'un élément de renfort et d'une enveloppe de continuité d'appui selon un troisième mode de réalisation de l'invention ;
- la figure 5 illustre un store à enrouleur selon l'invention dont le tube d'enroulement présente un méplat.

Le principe général de l'invention repose donc sur la mise en oeuvre d'un store à enrouleur mobile entre au moins deux positions, une position repliée et une position déployée, destiné à occulter une surface d'un véhicule et comprenant une enveloppe de continuité d'appui au voisinage d'éléments longitudinaux de renfort, de façon à d'empêcher, ou à tout le moins de limiter, le marquage de la toile lors de l'enroulement et à faciliter l'enroulement et le déroulement de la toile.

La surface à occulter peut par exemple être un pavillon intégralement ou en grande partie vitré. L'invention peut également être utilisée pour une vitre arrière de véhicule, un cache-bagages, etc.

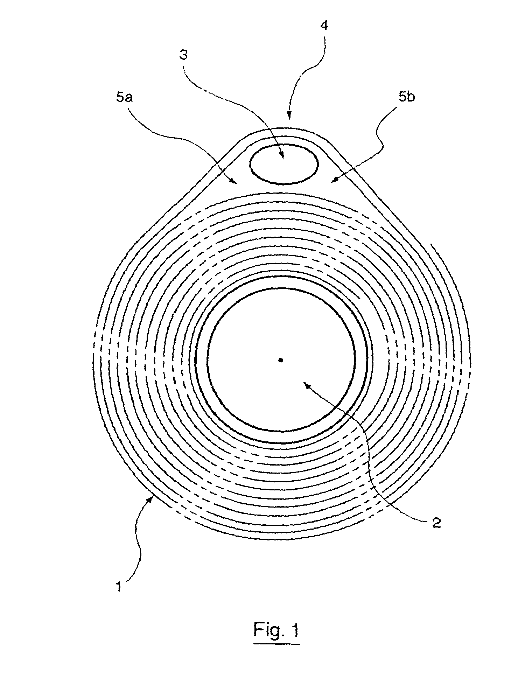

On présente en référence avec la figure 1, la coupe transversale d'un store (ou dispositif d'occultation) à enrouleur selon l'art antérieur, en position repliée (ou partiellement repliée).

Le store comprend une toile 1 montée sur un tube enrouleur 2, sur laquelle est rapportée, par collage par exemple, une baleine 3 réalisée classiquement en plastique ou en métal.

La présence de la baleine, destinée à maintenir la toile sans qu'elle ne pôche lorsqu'elle est dans la position déployée, est à l'origine d'un balourd, c'est-à-dire de surépaisseurs locales de la toile lors de l'enroulement. Le tour d'enroulement suivant de la toile 1 est tendu autour de la baleine 3 et est en contact avec une partie supérieure de celle-ci, définissant une zone de contact 4.

Un espace vide ou zone de non contact 5a, 5b apparaît de part et d'autre de la baleine 3 au niveau desquels la toile 1 n'est plus en contact avec le tour d'enroulement précédent.

Cette surépaisseur locale et la présence de zones de contact 4 et de non contact 5a, 5b perturbe l'enroulement, la contrainte (pouvant être mécanique) n'étant plus répartie de façon homogène, et « marque » la toile lorsqu'elle est repliée.

En outre, la baleine 3 peut être arrondie, telle que représentée par la figure 1, cependant, celle-ci peut également présenter une section transversale sensiblement rectangulaire ou carrée par exemple, les angles de celle-ci étant alors fortement susceptibles d'endommager la toile 1.

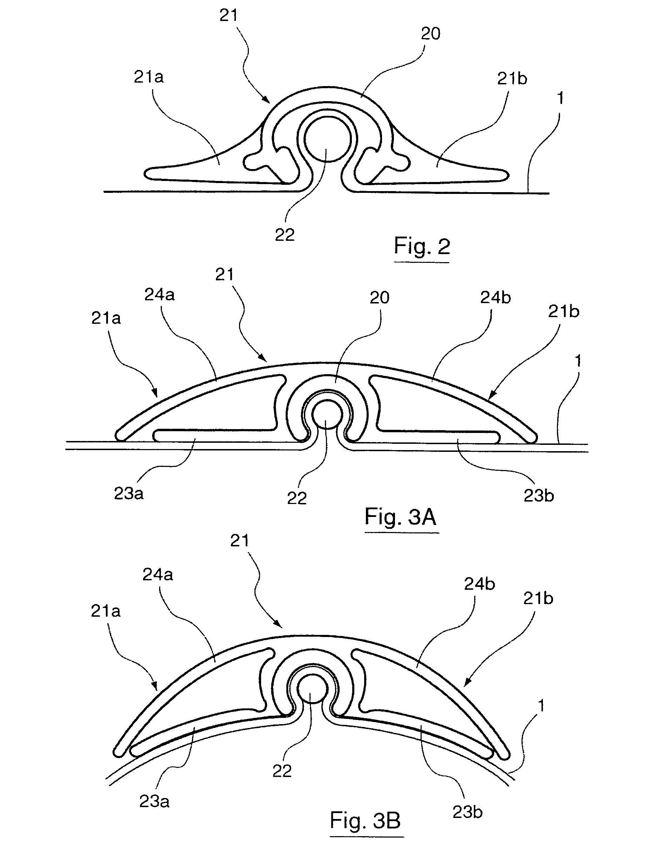

La figure 2 présente un premier mode de réalisation selon l'invention, illustrant selon une coupe transversale, un élément de renfort 20 associé à une enveloppe de continuité d'appui 21 pouvant équiper un store à enrouleur.

L'enveloppe de continuité d'appui 21 comprend deux ailes 21a et 21b réparties de part et d'autre de l'élément longitudinal de renfort 20, et est, selon ce mode de réalisation, formée par une partie supérieure de l'élément longitudinal de renfort 20.

L'enveloppe de continuité 21 est montée collée ou clipsée sur l'élément longitudinal de renfort 20, et l'ensemble formé par l'enveloppe de continuité 21 et l'élément de renfort 20 est rapporté par soudure ou par collage sur la toile d'occultation 1.

Cela permet une mise en oeuvre simple et peu coûteuse du procédé de fabrication du dispositif Un des inconvénients du report de l'ensemble par soudure reste que les lignes de soudure peuvent être visibles du côté de la toile exposé à la vue. En revanche, lorsque le report est fait par collage sur la toile 1, cet inconvénient n'est plus rencontré.

Des références numériques identiques désignent les mêmes éléments sur les figures 1, 2, 3A, 3B, 4A, 4B et 5.

L'ensemble formé par l'enveloppe 21 et l'élément de renfort 20 joue le rôle d'une baleine puisqu'il assurent le maintien de la toile 1 lorsque celle-ci est en position déployée.

L'enveloppe 21 assure, par sa forme et la présence des ailes 21a, 21b, une continuité d'appui du tour d'enroulement de la toile 1 suivant venant à son contact, lorsque la toile est enroulée autour du tube d'enroulement et empêche ainsi le marquage de la toile.

Tel qu'illustré sur la figure 1, l'élément longitudinal de renfort 20 forme une portion de cylindre creux à l'intérieur duquel circule la toile d'occultation 1, et peut être réalisé en plastique ou en métal par exemple, tel que l'acier.

Une tringle 22 de section circulaire est logée à l'intérieur de la cavité définie à l'intérieur de l'élément longitudinal de renfort 20 et immobilise ainsi la toile par rapport à celui-ci tout en contribuant à tendre celle-ci. Elle contribue en outre également au maintien de la toile en position déployée et peut être réalisée en plastique ou en métal.

La tringle 22 pourra être glissée à l'intérieur de l'élément de renfort 20 ou clipsée à l'intérieur de celui-ci, auquel cas la portion de cylindre qu'il défmi et son diamètre devront être choisis de façon que l'on puisse clipser la tringle aisément et qu'elle soit convenablement maintenue. On pourra également ajouter de la colle sur la partie supérieure de la tringle 22 coïncidant avec l'ouverture de l'élément de renfort, de façon que la toile 1 soit mieux immobilisée à l'intérieur de l'élément de renfort 20.

L'enveloppe de continuité d'appui 21, et notamment les ailes 21a, 21b, sont avantageusement réalisée au moins partiellement dans un matériau souple compressible ou incompressible.

Les matériaux compressibles pouvant être utilisés sont en particulier les mousses comme les matériaux expansés de type polyuréthanne, polypropylène ou polystyrène par exemple.

Les matériaux souples mais non (ou faiblement) compressibles sont des matériaux déformables sous une contrainte, comme par exemple le caoutchouc, le TPE (Thermo Plastique Elastomère) ou l'EPDM (Ethylène Propylène Diène Monomère).

Ainsi, lorsque la toile 1 est repliée et s'enroule autour du tube d'enroulement, l'enveloppe 20 et en particulier les ailes 21a, 21b, épousent la forme courbée du tube d'enroulement, comme cela sera illustré dans la suite.

La forme des ailes 21a, 21b est choisie de façon que lorsque le store est replié, elles forment une continuité d'appui au niveau des zones de non contact 5a, 5b décrites précédemment et existant dans le cas de stores classiques.

Elles empêchent ainsi le marquage de la toile 1 lorsqu'elle est en position repliée, la toile du tour d'enroulement suivant venant en contact avec l'enveloppe de continuité 21.

En outre, elles permettent la répartition de la contrainte lors de l'enroulement et assurent ainsi un repliement et un déploiement efficace de la toile 1. L' « effet mousse » du matériau utilisé pour la réalisation de l'enveloppe 21 contribue à la protection de la toile, mais également à la répartition de cette contrainte.

L'utilisation de matériaux légers pour la réalisation de l'enveloppe 21 permet de limiter le poids du store.

Les figures 3A et 3B illustrent, selon une coupe transversale, la mise en oeuvre d'une enveloppe de continuité d'appui 21 selon un deuxième mode de réalisation de l'invention.

Selon ce mode de réalisation, l'enveloppe 21 réalisée en matière souple recouvre la partie supérieure de l'élément de renfort 20 de façon à protéger la toile 1 du tour d'enroulement suivant venant au contact de cette zone en position repliée.

Les ailes 21a, 21b de l'enveloppe 21 comprennent chacune respectivement une partie supérieure 24a, 24b et une partie inférieure 23a, 23b. La zone comprise entre ces deux parties pourra être vide de façon à limiter le poids de l'ensemble du store et de façon à permettre une déformation aisée des ailes lors de l'enroulement.

Les figures 3A et 3B représentent respectivement l'ensemble formé par un élément de renfort, l'enveloppe de continuité 21 et la tringle 22 lorsque la toile 1 est déployée et lorsqu'elle est repliée autour d'un tube d'enroulement. La figure 3B illustre ainsi la déformation des ailes 21a, 21b lors de l'enroulement.

En position repliée, les parties inférieures 23a et 23b des ailes 21a, 21b viennent au contact du tour d'enroulement précédent de la toile et le tour d'enroulement suivant vient au contact des parties supérieures 24a, 24b formant ainsi la continuité d'appui de la toile 1.

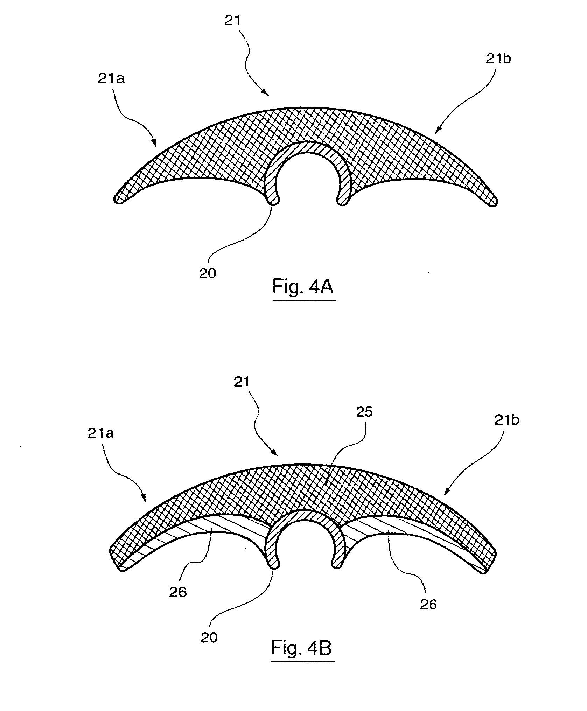

Les figures 4A et AB présentent la coupe transversale d'un élément de renfort 20 et d'une enveloppe de continuité d'appui 21 selon un troisième mode de réalisation de l'invention, selon lequel les ailes 21a, 21b de l'enveloppe 21 présentent une forme arquée particulière définissant la continuité d'appui du tour d'enroulement suivant de la toile 1.

Leur forme convexe définissent une cavité inférieure et lors de l'enroulement, sous l'effet de la contrainte, les ailes 21a, 21b vont s'arquer de façon supplémentaire.

La figure 4A illustre une enveloppe 21 réalisée intégralement dans un même matériau et la figure 4B illustre une enveloppe 21 réalisée dans deux matériaux 25, 26 de souplesse différente.

Ainsi une partie inférieure de chacune des ailes 21a, 21b est réalisée dans un matériau un peu moins souple 26 et forme une structure de support de l'aile et la partie supérieure de l'aile est réalisée dans un matériau 25 plus souple et assurant la protection du tour d'enroulement suivant de la toile 1.

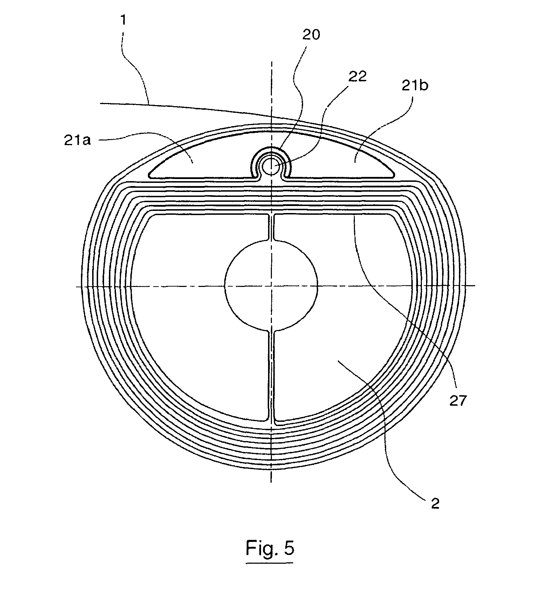

La figure 5 illustre un store à enrouleur selon l'invention dans la position repliée dans laquelle la toile 1 est enroulée autour d'un tube d'enroulement 2.

Le tube d'enroulement 2 présente un méplat 27 permettant de compenser le balourd formé par l'élément de renfort 20, de façon que le store en position repliée conserve une forme sensiblement cylindrique.

Il sera bien sûr possible de prévoir plusieurs méplats dont la position autour du tube est déterminée de façon qu'elle coïncide avec la position d'un élément longitudinal de renfort 20 dans la position repliée.

Avantageusement, comme illustré par la figure 5, les bords d'un méplats pourront en particulier être arrondis, de façon qu'ils ne détériorent pas la toile 1.

Le nombre, la forme et l'espacement des éléments de renfort 20 sont choisis en fonction des caractéristiques de la toile, et de sa surface.

Dans le cas d'un cache-bagages, le nombre et la répartition des éléments de renfort pourront être choisis en fonction du poids que l'on souhaite que celui-ci puisse supporter, de façon par exemple à pouvoir poser un objet tel qu'un vêtement par exemple sur celui-ci.

Avantageusement, une épaisseur de Jersey (marque déposée) pouvant être assorti à la garniture intérieure du véhicule pourra être rapportée sur la face de la toile tournée vers l'intérieur du véhicule en position déployée.

D'une façon générale, dans les différents modes de réalisation décrits, les éléments de renfort 20 pourront se prolonger (ou présenter des prolongements adaptés) de façon que leurs extrémités soient guidées et/ou maintenues dans des rails prévus à cet effet.

## Revendications

1. Store à enrouleur pour véhicule automobile, comprenant une toile d'occultation (1) montée sur un tube enrouleur (2) et mobile entre au moins deux positions, une position repliée, dans laquelle ladite toile est enroulée autour dudit tube enrouleur, et une position déployée, dans laquelle ladite toile d'occultation est maintenue et/ou guidée par au moins un élément longitudinal de renfort (20) s'étendant parallèlement audit tube enrouleur (2),
**caractérisé en ce que** ledit store comprend une enveloppe (21) de continuité d'appui de ladite toile d'occultation au voisinage dudit élément longitudinal de renfort (20), présentant deux ailes (21a, 21b); réparties de part et d'autre dudit élément longitudinal de renfort (20), d'épaisseur variable, diminuant progressivement en s'approchant des extrémités desdites ailes,
de façon que dans ladite position repliée, ladite toile d'occultation (1) prenne appui sur lesdites ailes (21a,21b) au voisinage dudit élément longitudinal de renfort (20), pour assurer sensiblement une continuité d'appui pour l'ensemble de ladite toile d'occultation.

2. Store à enrouleur selon la revendication 1, **caractérisé en ce que** ladite toile d'occultation (1) circule à l'intérieur dudit élément longitudinal de renfort (20) et **en ce que** des moyens de blocage (22) immobilisent ladite toile d'occultation par rapport audit élément longitudinal de renfort.

3. Store à enrouleur selon la revendication 2, **caractérisé en ce que** lesdits moyens de blocage forment une tringle (22) de maintien venant se loger à l'intérieur dudit élément longitudinal de renfort.

4. Store à enrouleur selon l'une quelconque des revendications 1 à 3, **caractérisé en ce que** ladite enveloppe est montée clipsée et/ou collée sur ledit élément longitudinal de renfort.

5. Store à enrouleur selon l'une quelconque des revendications 1 à 4, **caractérisé en ce que** ladite enveloppe (21) est formée par une portion supérieure dudit élément longitudinal de renfort (20) et par lesdites deux ailes (21a,21b).

6. Store à enrouleur selon l'une quelconque des revendications 1 à 5, **caractérisé en ce que** la ou lesdites enveloppes sont réalisées au moins partiellement dans un matériau souple.

7. Store à enrouleur selon la revendication 6, **caractérisé en ce que** ledit matériau est un matériau compressible de type mousse.

8. Store à enrouleur selon la revendication 7, **caractérisé en ce que** ledit matériau compressible est choisi parmi le polyuréthanne, le polypropylène et le polystyrène.

9. Store à enrouleur selon la revendication 6, **caractérisé en ce que** ledit matériau est un matériau incompressible.

10. Store à enrouleur selon la revendication 9, **caractérisé en ce que** ledit matériau incompressible est choisi parmi le caoutchouc, le TPE (Thermo Plastique Elastomère) et l'EPDM (Ethylène Propylène Diène Monomère).

11. Store à enrouleur selon l'une quelconque des revendications 1 à 10, **caractérisé en ce que** ladite enveloppe (21) présente, une surface inférieure (23a, 23b) venant dans la position repliée prendre appui sur le tour d'enroulement précédent de ladite toile d'occultation, et une surface supérieure (24a, 24b) sur laquelle vient prendre appui le tour d'enroulement suivant de ladite toile d'occultation.

12. Store à enrouleur selon l'une quelconque des revendications 1 à 11, **caractérisé en ce que** la ou lesdites enveloppes sont réalisées par extrusion ou par moulage.

13. Store à enrouleur selon l'une quelconque des revendications 1 à 12, **caractérisé en ce que** la ou lesdites enveloppes sont rapportées par collage ou par moulage sur ladite toile d'occultation.

14. Store à enrouleur selon l'une quelconque des revendications 1 à 13, **caractérisé en ce que** ledit tube enrouleur (2) présente au moins un méplat (27), coïncidant avec la position d'un élément longitudinal de renfort (20) dans ladite position repliée, de façon que ledit store définisse, en fin d'enroulement, une section sensiblement circulaire.

15. Store à enrouleur selon l'une quelconque des revendications 1 à 14, **caractérisé en ce qu**'il est destiné à occulter au moins un des éléments appartenant au groupe comprenant :
- les vitres latérales;
- les vitres de custode;
- les vitres arrière ;
- les pavillons ;
- les toits ouvrants ; et/ou
- les espaces destinés à recevoir les bagages.

16. Véhicule automobile **caractérisé en ce qu**'il comprend au moins un store à enrouleur selon l'une quelconque des revendications 1 à 15.

## Claims

1. Roller blind for a motor vehicle, including an occultation cloth (1) mounted on a roller tube (2) and mobile between at least two positions, a rolled up position, wherein said cloth is wound around said roller tube, and a rolled out position, wherein said occultation cloth is held and/or guided by at least one longitudinal reinforcement element (20) extending parallel to said roller tube (2),
**characterized in that** said blind includes a casing (21) for continuity of support of said occultation cloth, in the vicinity of said longitudinal reinforcement element, presenting two wings (21a, 21b), distributed on either side of said longitudinal reinforcement element (20), of variable thickness, that gets gradually smaller approaching the ends of said wings,
in such a way that in said rolled up position, said occultation cloth (1) is seated on said wings in the vicinity of said longitudinal reinforcement element (20), so as to ensure substantially a continuity of support for the whole of said occultation cloth.

2. Roller blind according to claim 1, **characterized in that** said occultation cloth (1) runs inside said longitudinal reinforcement element (20) and **in that** locking means (22) immobilize said occultation cloth relative to said longitudinal reinforcement element.

3. Roller blind according to claim 2, **characterized in that** said locking means form a holding rod (22) that is accommodated inside said longitudinal reinforcement element.

4. Roller blind according to any one of claims 1 to 3, **characterized in that** said casing is mounted snapped and/or bonded onto said longitudinal reinforcement element.

5. Roller blind according to any one of claims 1 to 4, **characterized in that** said casing (21) is formed by an upper portion of said longitudinal reinforcement element (20) and by said two wings (21a, 21b).

6. Roller blind according to any one of claims 1 to 5, **characterized in that** said casing or casings are made at least partially out of a flexible material.

7. Roller blind according to claim 6, **characterized in that** said material is a compressible material of the foam type.

8. Roller blind according to claim 7, **characterized in that** said compressible material is selected from polyurethane, polypropylene and polystyrene.

9. Roller blind according to claim 6, **characterized in that** said material is an incompressible material.

10. Roller blind according to claim 9, **characterized in that** said incompressible material is selected from rubber, TPE (Thermo Plastic Elastomer), and EPDM (Ethylene Propylene Diene Monomer).

11. Roller blind according to any one of claims 1 to 10, **characterized in that** said casing (21) has a lower surface (23a, 23b) which in the rolled up position becomes seated on the previous roll turn of said occultation cloth, and an upper surface (24a, 24b) on which the next roll turn of said occultation cloth is seated.

12. Roller blind according to any one of claims 1 to 11, **characterized in that** said casing or casings are made by extrusion or by moulding.

13. Roller blind according to any one of claims 1 to 12, **characterized in that** said casing or casings are added by being bonded or moulded onto said occultation cloth.

14. Roller blind according to any one of claims 1 to 13, **characterized in that** said roller tube (2) has at least one flat (27), coinciding with the position of a longitudinal reinforcement element (20) in said rolled up position, such that said blind defines, at the end of winding, a substantially circular cross-section.

15. Roller blind according to any one of claims 1 to 14, **characterized in that** it is intended to screen at least one of the elements belonging to the group including:
- side windows;
- rear quarter windows;
- rear windows;
- roofs;
- sun roofs; and/or
- spaces intended to receive luggage.

16. Motor vehicle **characterized in that** it includes at least one roller blind according to any one of claims 1 to 15.

## Patentansprüche

1. Rollo für Kraftfahrzeuge, das eine Verdunkelungsstoffbahn (1) aufweist, welche auf einer Aufrollwalze (2) angebracht ist und sich zwischen mindestens zwei Positionen bewegen lässt, eine zusammengefaltete Position, in der die besagte Stoffbahn um die besagte Aufrollwalze aufgerollt ist und eine entfaltete Position, in der die besagte Verdunkelungsstoffbahn durch mindestens ein sich der Länge nach und parallel zur Aufrollwalze (2) erstreckendes Verstärkungselement (20) gehalten und/oder geführt wird, **dadurch gekennzeichnet, dass** das besagte Rollo eine Hülle (21) zum kontinuierlichen Halten der besagten Verdunkelungsstoffbahn in der Nähe des sich der Länge nach erstreckenden Verstärkungselementes (20) aufweist, wobei diese Hülle zwei Flügel (21 a, 21 b) aufweist, die auf beide Seiten des besagten, sich der Länge nach erstreckenden Verstärkungselementes (20) verteilt sind, wobei das Verstärkungselement eine variable Stärke aufweist, die allmählich zu den Enden der besagten Flügel hin abnimmt,
so dass in der besagten zusammengefalteten Position die besagte Verdunkelungsstoffbahn (1) sich auf die besagten Flügel (21 a, 21 b) in der Nähe des besagten, sich der Länge nach erstreckenden Verstärkungselementes (20) aufstützt, um in etwa ein kontinuierliches Halten für die gesamte Verdunkelungsstoffbahn sicherzustellen.

2. Rollo nach Anspruch 1, **dadurch gekennzeichnet, dass** die besagte Verdunkelungsstoffbahn (1) im Inneren des besagten, sich der Länge nach erstreckenden Verstärkungselementes (20) läuft und **dadurch**, dass Mittel zum Blockieren (22) die Verdunkelungsstoffbahn gegenüber dem sich der Länge nach erstreckenden Verstärkungselementes (20) so festhalten, dass sie sich nicht bewegen lässt.

3. Rollo nach Anspruch 2, **dadurch gekennzeichnet, dass** die Mittel zum Blockieren eine Haltestange (22) bilden, die in das Innere des besagten, sich der Länge nach erstreckenden Verstärkungselementes passt.

4. Rollo nach einem der Ansprüche 1 bis 3, **dadurch gekennzeichnet, dass** die besagte Hülle auf das besagte, sich der Länge nach erstreckende Verstärkungselement durch Einklicken und/oder Kleben aufgebracht ist.

5. Rollo nach einem der Ansprüche 1 bis 4, **dadurch gekennzeichnet, dass** die besagte Hülle (21) durch einen oberen Teil des besagten, sich der Länge nach erstreckenden Verstärkungselementes (20) und durch die besagten zwei Flügel (21 a, 21 b) gebildet wird.

6. Rollo nach einem der Ansprüche 1 bis 5, **dadurch gekennzeichnet, dass** die besagte(n) Hülle(n) zumindest teilweise aus einem biegsamen Werkstoff gefertigt ist (sind).

7. Rollo nach Anspruch 6, **dadurch gekennzeichnet, dass** der besagte Werkstoff ein kompressibler Stoff von der Art eines Schaums ist.

8. Rollo nach Anspruch 7, **dadurch gekennzeichnet, dass** der besagte kompressible Werkstoff unter den Stoffen Polyurethan, Polypropylen und Polystyrol gewählt wird.

9. Rollo nach Anspruch 6, **dadurch gekennzeichnet, dass** der besagte Werkstoff nicht kompressibel ist.

10. Rollo nach Anspruch 9, **dadurch gekennzeichnet, dass** der besagte nicht kompressible Werkstoff unter den Stoffen Kautschuk, TPR (thermoplastisches Elastomer) und EPDM (Monomeres Ethylen-Propylen-Dien) gewählt wird.

11. Rollo nach einem der Ansprüche 1 bis 10, **dadurch gekennzeichnet, dass** die besagte Hülle (21) eine untere Fläche (23a, 23b) aufweist, die in der zusammengefalteten Position auf der vorhergehenden Aufrollwindung der besagten Verdunkelungsstoffbahn aufliegt und eine obere Fläche (24a, 24b), auf der die nachfolgende Aufrollwindung der besagten Verdunkelungsstoffbahn aufliegt.

12. Rollo nach einem der Ansprüche 1 bis 11, **dadurch gekennzeichnet, dass** die besagte(n) Hülle(n) extrudiert oder geformt wird (werden).

13. Rollo nach einem der Ansprüche 1 bis 12, **dadurch gekennzeichnet, dass** die besagte(n) Hülle(n) auf die besagte Verdunkelungsstoffbahn durch Kleben oder Formen aufgebracht wird (werden).

14. Rollo nach einem der Ansprüche 1 bis 13, **dadurch gekennzeichnet, dass** die besagte Aufrollwalze (2) mindestens eine abgeflachte Stelle (27) aufweist, die mit der Position eines sich der Länge nach erstreckenden Verstärkungselementes (20) in der besagten zusammengefalteten Position zusammenpasst, so dass das besagte Rollo am Ende des Aufrollvorgangs einen in etwa kreisförmigen Querschnitt aufweist.

15. Rollo nach einem der Ansprüche 1 bis 14, **dadurch gekennzeichnet, dass** es mindestens eines der Elemente aus der folgenden Gruppe zudecken soll:
- die Seitenfenster;
- die Fenster der hinteren Türen;
- die hinteren Fenster;
- die Autodächer;
- Schiebedächer und/oder
- Gepäckräume.

16. Kraftfahrzeug, **dadurch gekennzeichnet, dass** es mindestens ein Rollo nach einem der Ansprüche 1 bis 15 aufweist.
